# FASCICULE DE BREVET EUROPEEN

(11) **EP 3 694 318 B1**
(45) Date de publication et mention de la délivrance du brevet: **14.05.2025**
(21) Numéro de dépôt: 18825755.4
(22) Date de dépôt: 27.11.2018
(51) Int. Cl.: A01M 7/00

(54) **JAMBE DE PULVÉRISATION MODULAIRE**
MODULARER SPRÜHARM
MODULAR SPRAYING LEG

(30) Priorité: 27.11.2017 FR 1761224
(43) Date de publication de la demande: 19.08.2020
(73) Titulaire: Exel Industries, 75009 Paris (FR)
(72) Inventeur: GODIA, Josep, 75009 Paris (FR)
(74) Mandataire: Argyma
(86) Numéro de dépôt international: PCT/FR2018/053002
(87) Numéro de publication internationale: WO 2019/102166

(56) Documents cités:
- EP-A1- 0 704 157
- EP-A1- 1 468 605
- EP-A1- 3 062 615
- EP-B1- 0 722 657
- AU-B2- 2009 202 946
- FR-A1- 2 989 250
- US-A- 5 062 572

## Description

La présente invention se rapporte à une jambe de pulvérisation pour pulvérisateur agricole comprenant des modules de circulation d'air pour une telle jambe, et à un pulvérisateur agricole équipé d'au moins une telle jambe.

On connaît de la technique antérieure des pulvérisateurs agricoles comprenant des jambes de pulvérisation, chaque jambe de pulvérisation étant munie d'ensembles de diffuseurs d'air et de buses de pulvérisation, permettant d'envoyer sur la végétation à traiter des produits phytosanitaires entraînés par de l'air pulsé.

Les documents AU2009202946B2, EP0704157A1, EP0722657B1, ainsi que US4982898A (figure 7) représentent des pulvérisateurs agricoles connus.

La présente invention vise à fournir une jambe de pulvérisation pouvant aisément être adaptée à la nature des végétaux à traiter, à savoir en particulier à leur hauteur et à leur configuration.

A cet effet, la présente invention fournit une jambe de pulvérisation, telle que revendiquée.

La présente invention se rapporte également à un pulvérisateur agricole, équipé d'au moins une jambe de pulvérisation conforme à ce qui précède.

D'autres caractéristiques et avantages de la présente invention apparaîtront à la lumière de la description qui va suivre, et à l'examen des figures ci annexées, dans lesquelles :
- les figures 1 à 5 représentent chacune de manière schématique deux jambes de pulvérisation selon l'invention portées par un engin agricole (non représenté), enserrant un végétal à traiter, les jambes de pulvérisation présentant différentes configurations possibles,
- les figures 6 et 7 représentent, en perspective, une configuration possible de jambe de pulvérisation selon l'invention, vue sous deux angles différents, correspondant au schéma représenté à la figure 1,
- les figures 8a et 8b représentent, en perspective et sous deux angles différents, un module de jambe de pulvérisation selon l'invention, du type pouvant recevoir un seul ensemble de diffuseur d'air et de buse de pulvérisation,
- la figure 8c représente ce module en vue de dessus,
- les figures 9a et 9b représentent, en perspective et sous deux angles différents, un module de jambe de pulvérisation selon l'invention, du type pouvant recevoir deux ensembles de diffuseurs d'air et de buses de pulvérisation,
- les figures 10a et 10b représentent, en perspective et sous deux angles différents, un module de jambe de pulvérisation selon l'invention, du type pouvant recevoir trois ensembles de diffuseurs d'air et de buses de pulvérisation, et
- la figure 11 représente, en vue en perspective, un module de jambe de pulvérisation conforme aux figures 10a et 10b en train de pulvériser un liquide phytosanitaire sur des végétaux,
- les figures 12 et 13 représentent en perspective, une jambe de pulvérisation selon un mode de réalisation.

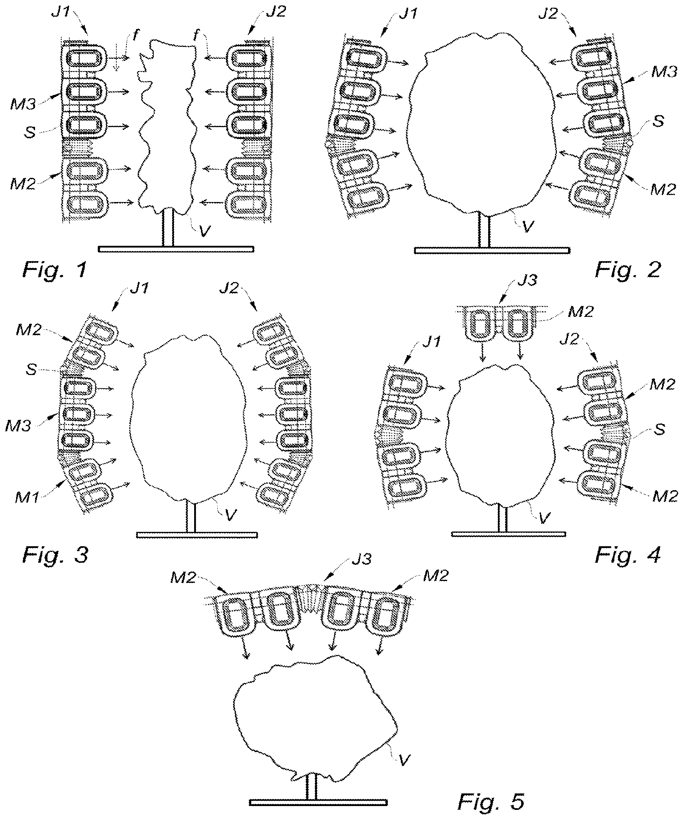

On se reporte à présent aux figures 1 à 5.

On a représenté sur la figure 1 deux jambes de pulvérisation J1 et J2 selon l'invention, comportant chacune deux modules M2 et M3 selon l'invention formant conduits de circulation d'air, montés sur un support rigide S.

Ces deux jambes de pulvérisation J1 et J2 sont suspendues à une structure de support (non représentée), elle-même reliée à un engin agricole (non représenté), cet engin agricole pouvant être remorqué, ou bien automoteur.

Ces deux jambes J1 et J2 sont disposées de part et d'autre d'un alignement de végétaux V à traiter par pulvérisation, les jets de pulvérisation étant symbolisés par les flèches f de la figure 1.

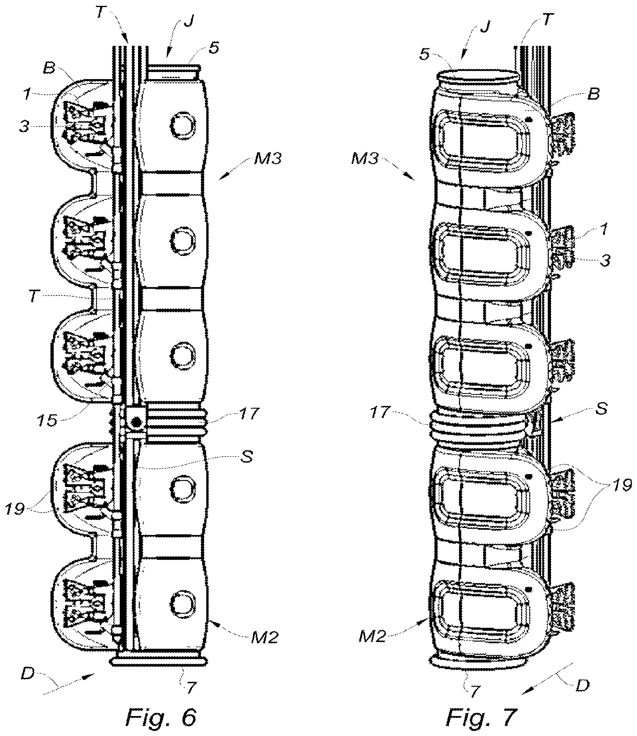

En se reportant aux figures 6, 7, 9a, 9b, on peut voir que le module M2 se présente sous la forme d'un caisson monobloc creux, comportant des orifices permettant d'accueillir deux ensembles de diffuseurs d'air 1a, 1b et de buses de pulvérisation 3a, 3b.

Afin de réaliser la pulvérisation, l'air circulant dans les jambes apporte un air propulseur jusqu'à une buse. L'air propulseur entre par une entrée de la buse, la traverse de part en part et ressort par une ouverture en sortie, sous forme d'un jet d'air dirigé vers les végétaux à traiter. La buse assure une fonction de mise en forme du jet d'air et sa distribution vers les végétaux à traiter. Le produit phytosanitaire est dispersé à l'ouverture de sortie de la buse afin d'être porté ou soufflé par le jet d'air dans le feuillage des végétaux à traiter.

Un ensemble de diffuseur d'air 1 et de buse de pulvérisation 3 est aussi appelé ensemble buse ou bloc buse et peut être considéré comme un un ensemble configuré pour assurer un mélange d'un produit phytosanitaire avec l'air propulseur pour former un aérosol, c'est-à-dire pour pulvériser et diffuser l'aérosol.

Avantageusement, cet ensemble est amovible, de préférence mais pas exclusivement, d'un seul tenant de la paroi qui la porte pour en faciliter la maintenance. Cet ensemble coopère de préférence avec un trou pratiqué dans la paroi avec lequel il coopère en position assemblée, cet ensemble peut être rapporté sur le trou et/ou à l'intérieur dudit trou.

Le caisson formant le module M2 comporte des parties B formant bouclier de protection pour chaque ensemble de diffuseur d'air 1 et de buse de pulvérisation 3 : ces boucliers, de forme sensiblement sphérique, sont disposés de manière à protéger ces ensembles vis-à-vis de chocs contre les végétaux à traiter lors du déplacement de l'engin agricole, le sens et la direction de ce déplacement étant indiqué par les flèches D sur les figures 6 à 11.

Le caisson formant le module M2 comporte un orifice d'arrivée d'air 5, et un orifice de sortie d'air 7.

Le caisson formant le module M2 présente une forme creuse, et est formé de préférence en polyéthylène.

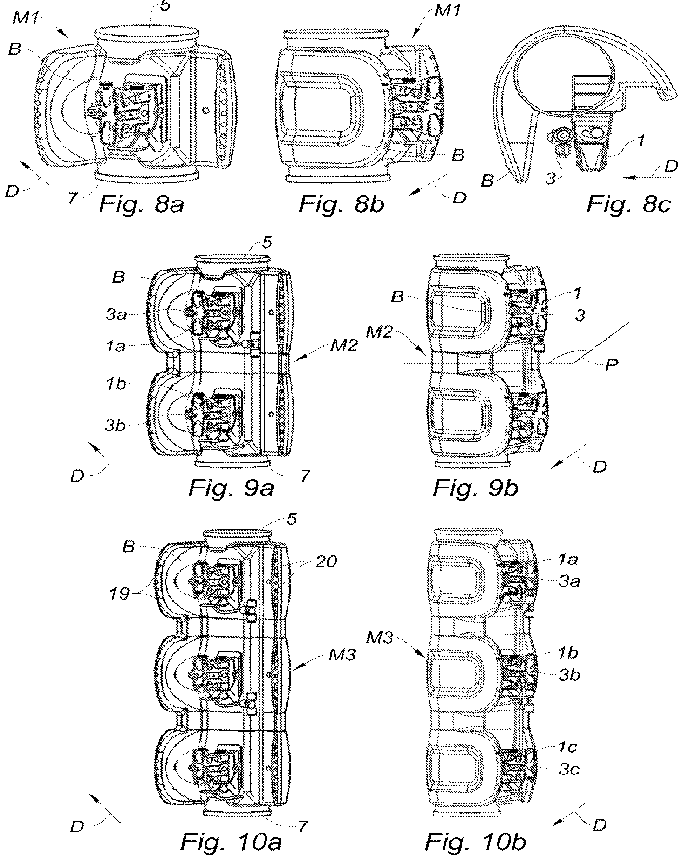

De préférence également, le caisson formant le module M2 est symétrique par rapport à un plan P (voir figure 9b) le coupant sensiblement en son milieu, de sorte qu'il peut être utilisé indifféremment pour une jambe de pulvérisation droite ou gauche.

Le caisson formant le module M2 est relié au support S par des vis ou rivets traversant ce caisson.

Comme visible sur les figures 6 et 7, le tuyau T d'arrivée de liquide phytosanitaire à pulvériser est fixé le long du support S, et relié au buses de pulvérisation 3 par des dérivations 15.

Dans le mode de réalisation représenté aux figures 1, 2, 6 et 7, le caisson formant le module M2 est surmonté d'un caisson analogue formant le module M3, représenté plus en détail sur les figures 10a et 10b.

Ce caisson formant le module M3 se distingue du caisson formant le module M2 en ceci qu'il présente une longueur axiale supérieure, de manière à pouvoir accueillir trois ensembles de diffuseurs d'air 1a, 1b, 1c et de buses de pulvérisation 3a, 3b, 3c.

Comme cela est visible sur les figures 6 et 7, les caissons formant les modules M2 et M3 sont reliés entre eux par un soufflet 17, pouvant lui au aussi être formé en polyéthylène.

Dans le mode de réalisation représenté aux figures 1, 6 et 7, chaque support S se présente sous la forme d'un profilé rigide, par exemple en aluminium, de sorte que les deux caissons formant les modules M2 et M3 sont immobiles l'un par rapport à l'autre.

En variante, dans la zone de liaison entre ces deux caissons, où se trouve le soufflet 17, le profilé S pourrait présenter une articulation orientable manuellement ou à l'aide d'un système motorisé, éventuellement asservi, de sorte que l'inclinaison entre les modules M2 et M3 pourrait être modifiée, comme cela est visible à la figure 2.

Ceci permet d'épouser au mieux la forme des végétaux V à traiter, et ainsi de conserver une distance de pulvérisation sensiblement constante par rapport à ces végétaux.

Selon un autre variante (non illustrée), un support S est formé en partie par les parois des modules ou intégré en partie à ces parois, par exemple par un renfort, les modules se présentant sous la forme d'un caisson monobloc creux délimitant des conduits de circulation d'air. Dans une telle configuration, les parois des caissons étant autosupportées, les modules sont reliés entre eux par des supports intermédiaires rigides.

De la même manière que précédemment avec un profilé rigide, dans la zone de liaison entre deux caissons, où se trouve le soufflet 17, une articulation peut être prévue pour équiper un support intermédiaire, l'articulation étant orientable manuellement ou à l'aide d'un système motorisé, éventuellement asservi, de sorte que l'inclinaison entre les deux modules concernés pourrait être modifiée.

Chaque jambe de pulvérisation délimite un canal de circulation de l'air entre les modules successifs et les zones de liaison associés, en alimentant en air le diffuseur d'air de chacun des ensembles de diffuseur d'air et de buse de pulvérisation.

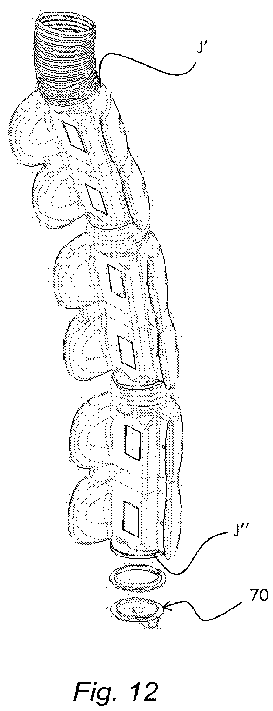

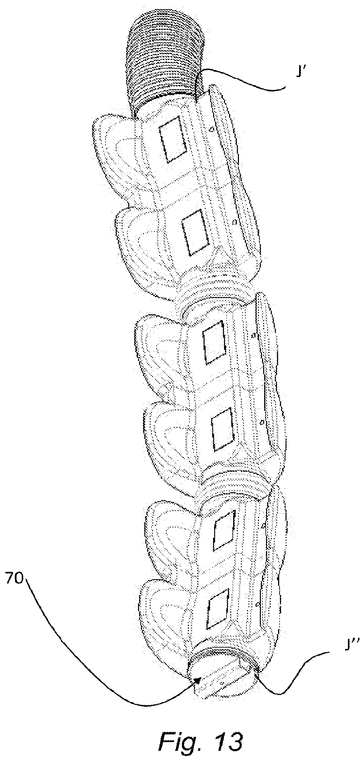

Dans une certaine configuration, la jambe de pulvérisation comporte une extrémité proximale et une extrémité distale :
- au niveau de son extrémité proximale J' correspond l'entrée d'air de la jambe qui correspond également à un orifice d'arrivée d'air du caisson le plus en amont de la jambe d'où arrive l'air ;
- au niveau de son extrémité distale J" correspond un orifice de sortie d'air 7 qui correspond également à un orifice de sortie d'air du caisson le plus en aval de la jambe, opposé à l'extrémité proximale, lequel orifice est fermé par un bouchon 70 (voir les figures 12 et 13).

Selon une configuration technique particulière, le bouchon 70 équipant l'extrémité distale de la jambe est amovible. Ceci permet notamment d'assurer un démontage rapide pour en assurer le nettoyage rapide par exemple, et plus efficace que si l'opérateur nettoyait l'intérieur de la jambe uniquement via l'orifice d'entrée d'air de la jambe.

Ce bouchon 70 est de préférence fixé au caisson par vissage et présente de préférence une paroi délimitant une cavité permettant à un utilisateur d'y pénétrer au moins une partie de sa main ou d'un outil pour manipuler le bouchon. On notera que d'autres moyens de fixation amovibles peuvent être utilisés tels que le clipsage et/ou la coopération de forme.

Par ailleurs, la solution d'une manipulation du bouchon par un outil adapté offre l'avantage de pouvoir former un bras de levier facilitant encore l'ouverture par un opérateur avec un moindre effort.

Une telle cavité permet notamment de protéger l'accès par un utilisateur aux moyens de fixation du bouchon 70.

On a représenté aux figures 8a à 8c un module M1, plus court que les deux modules précédents M2 et M3, apte à accueillir un seul ensemble de diffuseur d'air 1 et de buse de pulvérisation 3.

De manière optionnelle, et comme cela est visible par exemple sur les figures 6, 7, 10a ou 11, on peut prévoir que chacun des modules M1, M2, M3, présente des orifices supplémentaires 19, 20 de sortie d'air, situés respectivement en amont et en aval des diffuseurs d'air 1 par rapport au sens d'avancement D de l'engin agricole, ces orifices supplémentaires 19, 20 étant directement formés dans le matériau constitutif du caisson.

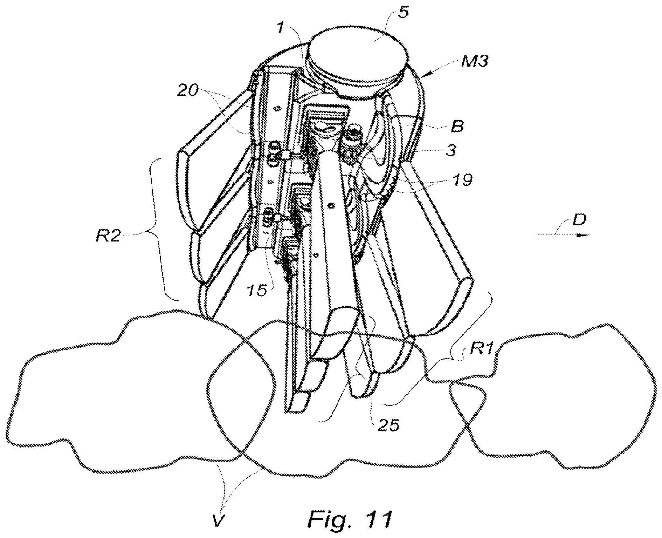

De manière avantageuse, on peut prévoir que ces orifices supplémentaires 19, 20 soient positionnés de manière à créer des rideaux d'air respectivement amont R1 et aval R2 (voir figure 11) dont l'inclinaison est respectivement de l'ordre de 10° et de 25° par rapport au jet d'air 25 engendré par les diffuseurs d'air 1.

En se reportant à présent aux figures 3 à 5, on peut voir d'autres configurations possibles de jambes de pulvérisation.

Sur la figure 3, chaque jambe J1, J2 comprend un module central M3 conforme aux figures 10a et 10b, de part et d'autre duquel se trouvent deux modules M2 conformes aux figures 9a et 9b.

Dans le mode de réalisation représenté à la figure 4, chaque jambe J1, J2 comporte deux modules M2 conformes aux figures 9a et 9b, et une troisième jambe supérieure J3 comporte également un tel module M2.

Dans le mode de réalisation représenté à la figure 5, une jambe de pulvérisation supérieure J3 comporte deux modules M2 conformes à la figure 10.

Le mode d'utilisation et les avantages de la présente invention résultent directement de la description qui précède.

La réalisation de chaque jambe de pulvérisation à l'aide de modules M1, M2, M3, permet de configurer cette jambe en fonction des besoins, c'est-à-dire notamment en fonction de la forme des végétaux à traiter.

Cette configuration peut être faite en usine, ou bien chez l'agriculteur, qui peut monter et démonter à loisir les modules, par exemple s'il a différents types de cultures à traiter.

Dans la variante où chaque support S de jambe de pulvérisation est articulé, on peut suivre au mieux l'enveloppe des végétaux à traiter, et ainsi optimiser la répartition de liquide phytosanitaire sur ces végétaux.

La présence des boucliers B formés de matière avec chaque caisson formant les modules M1, M2, M3, permet de protéger les ensembles de diffuseurs d'air 1 et de buses de pulvérisation 3 vis-à-vis des chocs contre les branchages des végétaux à traiter.

On notera de plus que ces boucliers B définissent des volumes supplémentaires à l'intérieur de chaque caisson formant les modules M1, M2, M3 au droit des diffuseurs d'air 1, permettant ainsi de compenser le volume qu'occupent ces diffuseurs d'air à l'intérieur du volume de chacun de ces caissons.

Ces volumes supplémentaires permettent d'éviter la création de bouchons d'air susceptibles de perturber le débit d'air des diffuseurs d'air aval.

Les orifices supplémentaires amont 19 créant un rideau d'air amont R1, ont pour effet d'agiter et d'ouvrir le feuillage en amont de la pulvérisation, facilitant ainsi l'aspersion de la totalité de la surface du feuillage en liquide phytosanitaire.

Les orifices supplémentaires aval 20 créant un rideau d'air aval R2, permettent de récupérer les gouttes de liquide phytosanitaire qui ont rebondi sur le feuillage des végétaux traités, ce qui a pour avantage d'éviter une perte dans l'air de liquide phytosanitaire, en arrière des jambes de pulvérisation par rapport au sens d'avancement de l'engin agricole.

## Revendications

1. Jambe de pulvérisation (J1, J2, J3) pour pulvérisateur agricole, comprenant au moins un support (S), et une pluralité de modules de pulvérisation (M1, M2, M3) fixés sur ce support (S), chaque module (M1, M2, M3) présentant la forme d'un caisson monobloc formant un conduit de circulation d'air et comprenant au moins un orifice d'arrivée d'air (5), au moins un orifice de sortie d'air (7), chaque module (M1, M2, M3) comprenant en outre une ouverture apte à recevoir chacune au moins un ensemble de diffuseur d'air (1) et de buse de pulvérisation (3), les modules (M1, M2, M3) étant reliés entre eux par des moyens de raccordement comprenant des soufflets (17), la jambe de pulvérisation (J1, J2, J3) délimitant ainsi un canal de circulation de l'air entre les modules (M1, M2, M3) successifs et le ou les soufflets (17) reliant lesdits modules entre eux, en alimentant en air le diffuseur d'air (1) de chacun des ensembles de diffuseur d'air (1) et de buse de pulvérisation (3), les parties dudit support (S) sur lesquelles sont fixés les modules (M1, M2, M3) étant en outre articulées entre elles.

2. Jambe de pulvérisation (J1, J2, J3) selon la revendication 1, dans laquelle les articulations desdites parties sont motorisées.

3. Jambe de pulvérisation (J1, J2, J3) selon l'une quelconque des revendications précédentes, dans laquelle une entrée d'air correspond à une entrée d'air d'un module amont de ladite jambe et dans laquelle une extrémité opposée à l'entrée d'air est fermée par un bouchon amovible.

4. Jambe de pulvérisation (J1, J2, J3) selon la revendication 4, dans laquelle l'au moins un module (M1, M2, M3) comprend des parties formant un bouclier de protection (B) pour ledit au moins un ensemble de diffuseur d'air (1) et de buse de pulvérisation (3).

5. Jambe de pulvérisation (J1, J2, J3) selon l'une des revendications 4 ou 5, dans laquelle l'au moins un module (M1, M2, M3) comprend des orifices de fixation sur ledit support (S).

6. Jambe de pulvérisation (J1, J2, J3) selon l'une quelconque des revendications 4 à 6, dans laquelle l'au moins un module (M1, M2, M3) comprend des orifices de sortie (19, 20) de rideaux d'air amont (R1) et/ou aval (R2) par rapport à un sens d'avancement du pulvérisateur agricole.

7. Jambe de pulvérisation (J1, J2, J3) conforme à l'une quelconque des revendications 4 à 7, dans laquelle l'au moins un module (M1, M2, M3) est formé en polyéthylène rigide ou flexible.

8. Pulvérisateur agricole, équipé d'au moins une jambe de pulvérisation conforme à l'une quelconque des revendications 1 à 8.

## Patentansprüche

1. Sprühstrang (J1, J2, J3) für eine landwirtschaftliche Feldspritze, umfassend mindestens einen Träger (S) und eine Vielzahl von auf diesem Träger (S) befestigten Sprühmodulen (M1, M2, M3), wobei jedes Modul (M1, M2, M3) die Form eines einteiligen Kastens aufweist, der einen Luftzirkulationskanal bildet und mindestens eine Lufteinlassöffnung (5) und mindestens eine Luftauslassöffnung (7) umfasst, wobei jedes Modul (M1, M2, M3) ferner eine Öffnung umfasst, die dazu geeignet ist, dass jeweils mindestens eine Baugruppe aus Luftverteiler (1) und Sprühdüse (3) aufgenommen werden kann, wobei die Module (M1, M2, M3) durch Verbindungsmittel, umfassend Faltenbälge (17), miteinander verbunden sind, wobei der Sprühstrang (J1, J2, J3) einen Luftzirkulationskanal zwischen den aufeinanderfolgenden Modulen (M1, M2, M3) somit begrenzt und der Faltenbalg oder die Faltenbälge (17) die Module miteinander verbindet/verbinden, wobei sie dem Luftverteiler (1) jeder der Baugruppen aus Luftverteiler (1) und Sprühdüse (3) Luft zuführen, wobei die Teile des Trägers (S), auf denen die Module (M1, M2, M3) befestigt sind, ferner gelenkig miteinander verbunden sind.

2. Sprühstrang (J1, J2, J3) nach Anspruch 1, wobei die Gelenke der Teile motorgetrieben sind.

3. Sprühstrang (J1, J2, J3) nach einem der vorstehenden Ansprüche, wobei ein Lufteinlass einem Lufteinlass eines dem Strang vorgelagerten Moduls entspricht und wobei ein dem Lufteinlass gegenüberliegendes Ende durch einen abnehmbaren Stopfen verschlossen ist.

4. Sprühstrang (J1, J2, J3) nach Anspruch 4, wobei das mindestens eine Modul (M1, M2, M3) Teile umfasst, die einen Schutzschild (B) für die mindestens eine Baugruppe aus Luftverteiler (1) und Sprühdüse (3) bilden.

5. Sprühstrang (J1, J2, J3) nach einem der Ansprüche 4 oder 5, wobei das mindestens eine Modul (M1, M2, M3) Befestigungsöffnungen am Träger (S) umfasst.

6. Sprühstrang (J1, J2, J3) nach einem der Ansprüche 4 bis 6, wobei das mindestens eine Modul (M1, M2, M3) Auslassöffnungen (19, 20) von in Bezug auf eine Vorwärtsrichtung der landwirtschaftlichen Feldspritze vorgelagerten (R1) und/oder nachgelagerten (R2) Luftschleiern umfasst.

7. Sprühstrang (J1, J2, J3) nach einem der Ansprüche 4 bis 7, wobei das mindestens eine Modul (M1, M2, M3) aus starrem oder flexiblem Polyethylen gebildet ist.

8. Landwirtschaftliche Feldspritze, die mit mindestens einem Sprühstrang nach einem der Ansprüche 1 bis 8 ausgestattet ist.

## Claims

1. Spraying leg (J1, J2, J3) for an agricultural sprayer, comprising at least one support (S) and a plurality of spraying modules (M1, M2, M3) attached to this support (S), each module (M1, M2, M3) being in the shape of a one-piece box forming an air circulation duct and comprising at least one air inlet orifice (5) and at least one air outlet orifice (7), each module (M1, M2, M3) further comprising an opening each suitable for receiving at least one air diffuser (1) and spraying nozzle (3) assembly, the modules (M1, M2, M3) being connected therebetween by connecting means comprising bellows (17), the spraying leg (J1, J2, J3) thus delimiting an air circulation channel between the successive modules (M1, M2, M3) and the bellows (17) connecting said modules therebetween, by supplying air to the air diffuser (1) of each of the air diffuser (1) and spraying nozzle (3) assemblies, the parts of said support (S) whereupon the modules (M1, M2, M3) are attached being further hinged therebetween.

2. Spraying leg (J1, J2, J3) according to claim 1, wherein the hinges of said parts are motorised.

3. Spraying leg (J1, J2, J3) according to either of the preceding claims, wherein an air inlet corresponds to an air inlet of a module upstream of said leg and wherein an end opposite the air inlet is closed by a removable plug.

4. Spraying leg (J1, J2, J3) according to claim 4, wherein the at least one module (M1, M2, M3) comprises parts forming a protective shield (B) for said at least one air diffuser (1) and spraying nozzle (3) assembly.

5. Spraying leg (J1, J2, J3) according to either claim 4 or claim 5, wherein the at least one module (M1, M2, M3) comprises orifices for attachment to said support (S).

6. Spraying leg (J1, J2, J3) according to any of claims 4 to 6, wherein the at least one module (M1, M2, M3) comprises air curtain outlet orifices (19, 20) upstream (R1) and/or downstream (R2) with respect to a travel direction of the agricultural sprayer.

7. Spraying leg (J1, J2, J3) according to any of claims 4 to 7, wherein the at least one module (M1, M2, M3) is made of rigid or flexible polyethylene.

8. Agricultural sprayer, equipped with at least one spraying leg according to any of claims 1 to 8.
